# EUROPÄISCHE PATENTSCHRIFT

(11) **EP 3 321 337 B1**
(45) Veröffentlichungstag und Bekanntmachung des Hinweises auf die Patenterteilung: **30.12.2020**
(21) Anmeldenummer: 17197437.1
(22) Anmeldetag: 20.10.2017
(51) Int. Cl.: C09J 5/02, B32B 7/12, B28B 19/00, B32B 37/26, H01B 7/02, H02K 3/30, H02K 3/40, C09J 7/22, H01M 2/02, B65H 35/00, B32B 1/00, B32B 38/00

(54) **MEHRLAGENVERKLEBUNG**
MULTI-LAYER ADHESIVE
CORPS ADHÉSIF MULTICOUCHE

(30) Priorität: 21.10.2016 DE 102016220691
(43) Veröffentlichungstag der Anmeldung: 16.05.2018
(73) Patentinhaber: tesa SE, 22848 Norderstedt (DE)
(72) Erfinder: Kipke, Jennifer, 20257 Hamburg (DE); Nagel, Christoph, 22417 Hamburg (DE); Sellin, Jannik, 22767 Hamburg (DE)

(56) Entgegenhaltungen:
- EP-A2- 1 498 910
- DE-A1-102013 007 429
- DE-A1-102014 204 737
- DE-A1-102014 222 723
- JP-A- 2006 249 240
- JP-A- 2009 024 042
- US-A- 5 106 383

## Beschreibung

Die Erfindung betrifft ein Verfahren zum umwickelnden Verkleben von einem sich in einem Wicklungsquerschnitt ausdehnenden Medium mit einem Klebeband.

Es ist eine Reihe von Applikationen von Klebebändern bekannt, bei der die Klebebänder um ein Medium mehrfach auf sich selbst gewickelt werden. Beispielsweise bei der Herstellung von Hochvoltspeichern werden Klebebänder mehrlagig auf sich selbst verklebt und gewickelt. Zum einen durch die Vorspannung bei der Wicklung selbst, aber auch durch einen Ausdehnungsprozess während der Lade- und Entladevorgänge der Batterien wird eine Kraft auf den Wicklungsverbund ausgeübt. In einigen Applikationen können die Klebebänder durch Filamente verstärkt sein. Die Filamente verlaufen vorzugsweise in Längsrichtung des Klebebandes und erhöhen die Zugfestigkeit des Klebebandes erheblich. Problematisch bei der Mehrfachwicklung ist jedoch über die Zugfestigkeit des Klebebandes hinaus die Klebkraft der aufeinanderliegenden Wicklungen. Üblicherweise werden die Klebebänder vor der Applikation auf einer Klebebandrolle zur Verfügung gestellt. Dazu sind die Rückseiten der Klebebänder, also die Seiten, die der Klebmasseschicht an einer Trägerfolie gegenüberliegen, außen mit einer Trennschicht ausgerüstet. Die Trennschicht setzt die Trennkraft zwischen der Trägerfolie und der Klebmasseschicht der nächstfolgenden Klebebandwicklung herab und macht das Klebeband erst von der Klebebandrolle abrollbar. Dadurch wird ein Liner überflüssig, und Kosten werden reduziert. Die Trennschicht kann beispielsweise eine silikonhaltige Schicht, aber auch eine Trennlackierung sein. Die Trennschicht bleibt üblicherweise nach dem Abwickeln des Klebebandes auf der äußeren Seite der Trägerfolie bestehen und setzt natürlich auch beim nachfolgenden Umwickeln des Mediums, wie beispielsweise Hochvoltspeicher, die Trennkräfte zwischen einer Klebebandwicklung und der unmittelbar nachfolgenden äußeren Klebebandwicklung herab. Insbesondere bei sich im Wicklungsquerschnitt ausdehnenden Medien, wie beispielsweise den Hochvoltspeichern, kann dieses dazu führen, dass die Wicklungen des Klebebandwickels durch die sich ausbildenden Dehnungskräfte gelöst werden.

Aus der JP 2009 024 042 A ist ein Klebebandträger mit einer Klebstoffbeschichtung und einer rückseitig geätzten Oberfläche bekannt. Das Klebeband wird zum Umwickeln von Kabeln verwendet.

Mit der DE 10 2014 204 737 A1 ein Zellmodul, insbesondere für ein Elektro- oder Hybridfahrzeug, mit einer Mehrzahl von Speicherzellen und mindestens einem Spannmittel zum Verspannen der Speicherzellen bekannt geworden, wobei das Spannmittel ein Klebeband ist.

Es ist daher Aufgabe der vorliegenden Erfindung, ein Verfahren zum umwickelnden Verkleben von sich im Querschnitt ausdehnenden Medien zur Verfügung zu stellen, das die oben genannten Nachteile vermeidet.

Die Aufgabe wird durch ein eingangs genanntes Verfahren mit den Merkmalen des Anspruchs 1 gelöst.

Das Klebeband zur Verwendung in dem erfindungsgemäßen Verfahren weist eine Trägerfolie auf, die sich vorzugsweise in einer gesamten Ausdehnung entlang einer Längsrichtung und Breite eines Klebebandes erstreckt. Auf einer Seite der Trägerfolie ist vorzugsweise vollflächig eine Klebmasseschicht und auf einer der einen Seite gegenüberliegenden Seite der Trägerfolie, im Weiteren auch als die Rückseite bezeichnet, ist eine Trennmittelschicht partiell vorhanden, wobei die von der Trennmittelschicht bedeckte Fläche maximal 50 %, vorzugsweise maximal 20 %, weiter vorzugsweise maximal 10 %, weiter vorzugsweise maximal 5 % der Gesamtfläche der Trägerrückseite einnimmt.
Erfindungswesentlich ist, dass zumindest die Oberfläche der Rückseite der Folie, vorzugsweise beide Oberflächen geätzt sind.

Das Klebeband wird auf einer Klebebandrolle zur Verfügung gestellt und zur Applikation von der Klebebandrolle abgerollt. Das Klebeband oder ein Abschnitt des Klebebandes wird abgerollt. Das Klebeband wird dann um das sich im Querschnitt ausdehnende Medium in der Weise herumgewickelt, dass zumindest ein Abschnitt des Klebebandes mit der Klebmasseschicht auf einer direkt benachbarten unteren Wicklungslage aufgeklebt wird.

Vorzugsweise ist es auch vorgesehen, dass das Klebeband in mehreren, übereinanderklebenden Wicklungslagen um das sich im Wicklungsquerschnitt ausdehnende Medium herumgewickelt wird. Das Klebeband klebt erfindungsgemäß ebenfalls auf sich selbst, zumindest entlang eines Abschnitts einer Wicklungslage oder entlang von mehreren Wicklungslagen.

Als Trägerfolie eignen sich Folien wie zum Beispiel PA, PU oder PVC, Polyolefinen oder Polyester, vorzugsweise ein Polyester aus PET (Polyethylenterephthalat) Die Folie selbst kann wiederum aus mehreren einzelnen Lagen bestehen, beispielsweise aus zu Folie coextrudierten Lagen.

Neben Polyolefinen sind Copolymere aus Ethylen und polaren Monomeren wie Styrol, Vinylacetat, Methylmethacrylat, Butylacrylat oder Acrylsäure geeignet. Es kann ein Homopolymer wie HDPE, LDPE, MDPE oder ein Copolymer aus Ethylen oder einem weiteren Olefin wie Propen, Buten, Hexen oder Octen (zum Beispiel LLDPE, VLLDE) sein. Geeignet sind auch Polypropylene (zum Beispiel Polypropylen-Homopolymere, Polypropylen-Random-Copolymere oder Polypropylen-Block-Copolymere).

Besonders bevorzugt sind Folien auf Basis von Polyester, insbesondere solche aus Polyethylenterephthalat.

Erfindungsgemäß hervorragend als Folien einsetzen lassen sich monoaxial und biaxial gereckte Folien. Monoaxial gerecktes Polypropylen beispielsweise zeichnet sich durch seine sehr hohe Reißfestigkeit und geringe Dehnung in Längsrichtung aus.

Um sehr gute Ergebnisse für die Aufrauhung zu erzielen, ist es zu empfehlen, als Reagenz zum Ätzen der Folie Trichloressigsäure (Cl₃C-COOH) oder Trichloressigsäure in Kombination mit inerten kristallinen Verbindungen, bevorzugt Siliziumverbindungen, besonders bevorzugt [SiO₂]ₓ, einzusetzen.
Sinn der inerten kristallinen Verbindungen ist, in die Oberfläche der PET-Folie eingebaut zu werden, um auf diese Weise die Rauigkeit und die Oberflächenenergie zu verstärken.

Die Dicke der Folie liegt gemäß einer bevorzugten Ausführungsform zwischen 5 und 250 µm, vorzugsweise zwischen 6 und 120 µm, insbesondere zwischen 12 und 100 µm, ganz besonders zwischen 28 und 50 µm, insbesondere bei 36 µm.

Besonders bevorzugt ist als Trägerfolie eine beidseitig geätzte Polyethylenterephthalatfolie. Eine solche ist unter der Handelsbezeichnung Kemafoil HPH bei der Firma Coveme erhältlich. Zur Herstellung der Folie kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Die Folie kann farbig und/oder transparent sein.

Auf einer Seite der Trägerfolie ist eine vorzugsweise vollflächig die Seite der Trägerfolie abdeckende Klebmasseschicht vorgesehen. Es können alle bekannten Klebmassesysteme verwendet werden.

Neben natur- oder synthesekautschukbasierten Klebmassen sind insbesondere Silikonklebmassen sowie Polyacrylatklebmassen, vorzugsweise eine niedermolekulare Acrylatschmelzhaftklebmasse, verwendbar. Letztere sind in der DE 198 07 752 A1 sowie in der DE 100 11 788 A1 näher beschrieben. Auch acrylatbasierende, UV-vernetzende Klebemassen sind geeignet.

Das Auftragsgewicht bewegt sich vorzugsweise im Bereich zwischen 15 bis 200 g/m², weiter vorzugsweise zwischen 30 bis 120 g/m², besonders bevorzugt bei 50 g/m² (das entspricht ungefähr einer Dicke von 15 bis 200 µm, weiter vorzugsweise von 30 bis 120 µm, besonders bevorzugt von 50 µm).

Vorzugsweise ist die Klebmasse eine Haftklebmasse, also eine viskoelastische Masse, die bei Raumtemperatur in trockenem Zustand permanent klebrig und klebfähig bleibt. Die Klebung erfolgt durch leichten Anpressdruck sofort auf fast allen Substraten.

Als Haftklebmassen finden solche auf Basis von Blockcopolymere enthaltenden Polymerblöcken Anwendung. Gebildet werden diese bevorzugt von Vinylaromaten (A-Blöcke) wie zum Beispiel Styrol und solchen durch Polymerisation von 1,3-Dienen (B-Blöcke) wie zum Beispiel Butadien und Isopren oder einem Copolymer aus beiden. Es können auch Mischungen unterschiedlicher Blockcopolymere zum Einsatz kommen. Bevorzugt werden Produkte eingesetzt, die zum Teil oder vollständig hydriert sind.

Die Blockcopolymere können eine lineare A-B-A-Struktur aufweisen. Einsetzbar sind ebenfalls Blockcopolymere von radialer Gestalt sowie sternförmige und lineare Multiblockcopolymere.

Anstelle der Polystyrolblöcke können auch Polymerblöcke auf Basis anderer aromatenhaltiger Homo- und Copolymere (bevorzugt C₈- bis C₁₂-Aromate) mit Glasübergangstemperaturen von > ca. 75 °C genutzt werden wie zum Beispiel α-methylstyrolhaltige Aromatenblöcke. Gleichfalls sind Polymerblöcke auf Basis von (Meth)acrylathomo- und (Meth)acrylatcopolymeren mit Glasübergangstemperaturen von > +75 °C nutzbar. Hierbei können sowohl Blockcopolymere zum Einsatz kommen, welche als Hartblöcke zum einen ausschließlich solche auf Basis von (Meth)acrylatpolymeren nutzen als zum anderen auch solche, die sowohl Polyaromatenblöcke, zum Beispiel Polystyrolblöcke, als auch Poly(meth)acrylatblöcke nutzen.

Die Angaben zur Glasübergangstemperatur für nicht anorganische und nicht überwiegend anorganische Materialien, insbesondere für organische und polymere Materialien, beziehen sich auf den Glasübergangstemperatur-Wert Tg nach DIN 53765:1994-03 (vgl. Abschnitt 2.2.1), sofern im Einzelfall nichts anderes angegeben ist.

Anstelle von Styrol-Butadien-Blockcopolymeren und Styrol-Isopren-Blockcopolymeren und/oder deren Hydrierungsprodukten, mithin Styrol-Ethylen/Butylen-Blockcopolymere und Styrol-Ethylen/Propylen-Blockcopolymere, können erfindungsgemäß ebenfalls Blockcopolymere und deren Hydrierungsprodukte genutzt werden, welche weitere polydienhaltige Elastomerblöcke nutzen wie zum Beispiel Copolymere mehrerer unterschiedlicher 1,3-Diene. Erfindungsgemäß nutzbar sind des Weiteren funktionalisierte Blockcopolymere wie zum Beispiel maleinsäureanhydridmodifizierte oder silanmodifizierte Styrolblockcopolymere.

Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Als Klebrigmacher dienen Klebharze.

Geeignete Klebharze sind unter anderem vorzugsweise partiell oder vollständig hydrierte Harze auf Basis von Kolophonium oder Kolophoniumderivaten. Es können auch zumindest zum Teil hydrierte Kohlenwasserstoffharze, zum Beispiel hydrierte Kohlenwasserstoffharze, erhalten durch teilweise oder vollständige Hydrierung von aromatenhaltigen Kohlenwasserstoffharzen (zum Beispiel Arkon P und Arkon M Serien der Firma Arakawa oder Regalite-Serie von Eastman), Kohlenwasserstoffharze auf Basis von hydrierten Dicyclopentadien-Polymeren (zum Beispiel Escorez 5300er-Serie von Exxon), Kohlenwasserstoffharze auf Basis von hydrierten C5/C9-Harzen (Escorez 5600er-Serie von Exxon) oder Kohlenwasserstoffharze auf Basis von hydrierten C5-Harzen (Eastotac der Firma Eastman) beziehungsweise deren Gemische eingesetzt werden.

Auch hydrierte Polyterpenharze auf Basis von Polyterpenen sind verwendbar. Vorgenannte Klebharze können sowohl allein als auch im Gemisch eingesetzt werden.

Als weitere Additive können typischerweise Lichtschutzmittel wie zum Beispiel UV-Absorber, sterisch gehinderte Amine, Antiozonantien, Metalldesaktivatoren, Verarbeitungshilfsmittel, endblockverstärkende Harze eingesetzt werden.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Die Klebmasse kann in Längsrichtung des Klebebands in Form eines Streifens aufgebracht sein, der eine geringere Breite aufweist als der Träger des Klebebands.

Der beschichtete Streifen kann eine Breite von 10 bis 80 % der Breite des Trägermaterials haben. Besonders vorzugsweise erfolgt in einem solchen Fall der Einsatz von Streifen mit einer Beschichtung von 20 bis 50 % der Breite des Trägermaterials.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Die Herstellung und Verarbeitung der Klebemassen kann aus Lösung, Dispersion sowie aus der Schmelze erfolgen. Bevorzugte Herstellungs- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebmassen mit Hilfe eines Extruders.

Bei Verarbeitung aus der Schmelze können dies Auftragsverfahren über eine Düse oder einen Kalander sein.

Bei Verfahren aus der Lösung sind Beschichtungen mit Rakeln, Messern oder Düsen bekannt, um nur einige wenige zu nennen.

Schließlich kann das Klebeband ein Abdeckmaterial aufweisen, mit dem bis zum Gebrauch die eine Klebmasseschicht eingedeckt ist. Als Abdeckmaterialien eignen sich auch alle oben ausführlich aufgeführten Materialien.
Bevorzugt wird aber ein nicht-fusselndes Material eingesetzt wie eine Kunststofffolie oder ein gut verleimtes, langfaseriges Papier.

Bevorzugt ist die Variante des Klebebands, bei der ein Liner vorhanden ist.
Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Problematisch an den bekannten Klebebändern ist die Tatsache, dass die Trennmittelschicht zum einen die Trennkräfte zwischen Klebmasseschicht und Trägerfolie vorteilhaft herabsetzen soll, damit ein Aufwickeln des Klebebandes auf sich selbst zur Lagerung möglich ist und auch ein Abrollen wieder ermöglicht. Das abgewickelte Klebeband weist immer noch eine Trennmittelschicht auf, so dass beim späteren erneuten Wickeln des Klebebandes um das sich im Wicklungsquerschnitt veränderliche Medium herum ebenfalls, nun aber nachteiligerweise, die Trennkräfte zwischen Klebmasseschicht und darunterliegender Trägerfolie verringern und die Festigkeit des Wickels verringern.

Überraschenderweise hat sich aber gezeigt, dass durch die Verwendung einer geätzten Folie die Trennkräfte in einem unerwartet hohen Maße erhöht werden können.

In einer bevorzugten Ausführungsform der Erfindung weist das Klebeband wenigstens ein in Längsrichtung des Klebebandes verlaufendes Filament auf, das die Zugfestigkeit erhöht. Bei einem Filament kann es sich insbesondere um Glasfilamente oder PET-Filamente handeln. Die Filamente können in die Trägerfolie und oder auch in die Klebmasseschicht integriert sein. Üblicherweise bestehen die Filamente aus einem Bündel an Einzelfilamenten, wobei das Bündel durch Schlichte, also ein Bindemittel, verklebte Einzelfilamente gebildet wird.

Die Filamente können in Längsrichtung nebeneinander, voneinander beabstandet angeordnet sein oder auch als Gelege oder Gewebe in die Trägerfolie oder die Klebmasseschicht oder beides integriert sein.

Das Filamentgelege oder -gewebe weist eine Zugfestigkeit in Längsrichtung von vorzugsweise mindestens 100 N/cm, weiter vorzugsweise 200 N/cm, besonders vorzugsweise 500 N/cm auf.

Vorzugsweise weisen die zur Bildung des Geleges oder des Gewebes verwendeten Garne eine Stärke von 80 bis 2200 dtex, vorzugsweise 280 bis 1100 dtex auf.

Im Sinne dieser Erfindung wird unter einem Filament ein Bündel paralleler gerader Einzelfasern/Einzelfilamente verstanden, das in der Literatur auch oft als Multifilament bezeichnet wird. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen verallgemeinernd nur noch der Begriff Filament verwendet.

Das Filament kann texturiert oder glatt und punktverfestigt oder unverfestigt vorliegen.

Das Gelege/Gewebe kann nachträglich gefärbt sein oder aus spinngefärbten Garnen bestehen.

Weiter bevorzugt bestehen die Filamente aus Polyester, Polypropylen, Polyethylen oder Polyamid, bevorzugt Polyester (Diolen).

Die Medien, die einen in seiner Größe veränderlichen Wicklungsquerschnitt aufweisen, sind beispielsweise Transformatoren, Verpackungen, Stahlbündel, Batterien und Hochvoltspeicher. Vorzugsweise sind die Medien in einer Wicklungsquerschnittsgröße durch vorzugsweise Temperatureinflüsse veränderlich. Um das Medium herum ist entlang des Wicklungsquerschnitts ein auf sich selbst gewickeltes Klebeband vorgesehen, das das Medium umläuft und auf ihm umlaufend aufliegt und auf ihm aufgeklebt ist

Die Erfindung wird anhand eines Ausführungsbeispiels in einer Figur beschrieben.

Dabei zeigen
- Fig. 1: eine schematische Darstellung eines statischen Schertests,

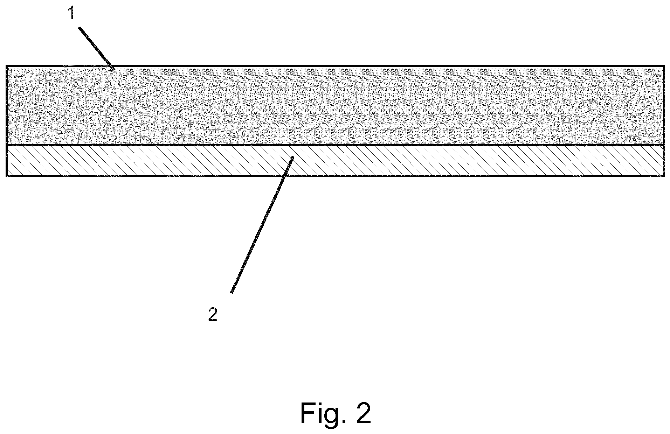

- Fig. 2: einen beispielhaften Aufbau eines erfindungsgemäßen Klebebands.

Die Erfindung betrifft ein Verfahren zur mehrfachen Umwicklung von sich im Wicklungsquerschnitt ausdehnenden Medien. Ein Beispiel einer solchen Anwendung ist die Herstellung von Hochvoltspeichern, bei der das Klebeband mehrlagig auf sich selbst verklebt wird. Durch die Vorspannung bei der Umwicklung und durch Ausdehnungsprozesse während des Lade- und Entladevorganges der Batterien wird eine Kraft auf den Klebebandwickel ausgeübt. Um den bei der Ausdehnung der Batterie entstehenden Zugkräften auf das Klebeband extrem zu widerstehen, kann das Klebeband mit einem oder mehreren in Längsrichtung verlaufenden Filamenten verstärkt sein.

Das erfindungsgemäße Klebeband weist eine geätzte Trägerfolie 1 auf und auf der einen Seite der Trägerfolie 1 eine Klebmasseschicht 2.

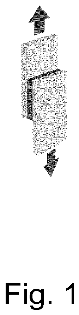

Eine Möglichkeit, die Klebkraft der Klebmasse, die auf der einen Seite der Trägerfolie aufgebracht ist, auf der anderen Seite zu prüfen, ist die Ermittlung der Scherbeständigkeit bei Verklebung auf der anderen Seite. Bei der verwendeten Methode zur Bestimmung der Scherbeständigkeit handelt es sich um einen dynamischen Schertest, der in Fig. 1 dargestellt ist. Die Prüfung wird wie folgt durchgeführt. Auf der Rückseite eines 40 x 25 mm großen Klebebandstreifens wird ein Klebebandstreifen von 40 x 25 mm auf einer Fläche von 25 x 25 mm verklebt; die Verklebungsfläche wird mit 100 N/cm² für eine Minute angedrückt. Der Klebebandverbund wird mit den überstehenden Klebebandstreifen mit einer Zugprüfmaschine befestigt; die Probe wird mit einer Geschwindigkeit von 50 mm pro Minute auseinandergezogen, gemessen wird die Kraft bezogen auf die Verklebungsfläche (N/cm²) bei der der Klebebandstreifen abgeschert wurde. Die Zugkräfte sind durch Pfeile dargestellt. Aus Vereinfachungsgründen ist die Klebemasse des oberen Klebebandstreifens überhaupt nicht dargestellt. Weiterhin ist bei dem zweiten Streifen die Klebemasse nur in der Verklebungsfläche gezeigt.

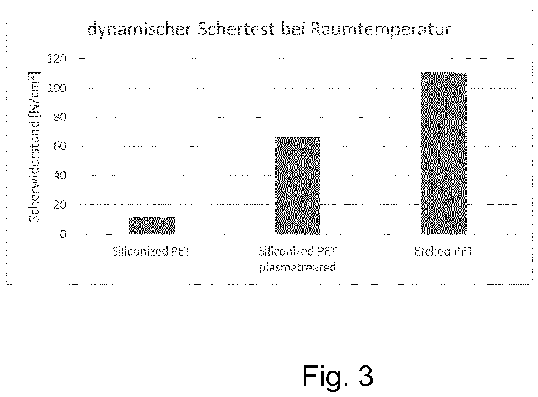

Die Trägerfolie 1 ist bei den Vergleichsbeispielen 1 und 2 eine silikonisierte PET-Folie, bei Beispiel 3 eine geätzte PET-Folie. Als Haftklebmasse wird eine Acrylatklebemasse verwendet. Die nachfolgende Graphik zeigt, dass die Scherbeständigkeit gegenüber der Beschichtung der Klebebandrückseite mit Silikon durch eine Plasmabehandlung ansteigt. Hierzu wird die mit einem Trennmittel ausgerüstete Rückseite der Trägerfolie durch eine physikalische Oberflächenbehandlung in Form einer Plasmabehandlung direkt vor der Applizierung des Klebebandes für die Verklebung optimiert. Bei Verwendung einer geätzten Folie als Träger ist ein nochmaliger deutlicher und unerwartet hoher Anstieg, in diesem Fall nahezu eine Verdopplung des Scherwiderstandes, zu sehen (siehe Figur 3)

Gegenüber den bekannten Standardklebebändern ohne Plasmabehandlung der Rückseite sind folgende Vorteile zu nennen:
- Sichere Fixierung bei Mehrlagenverklebung. Unter anderem kann dies verhindern, dass sich die letzte Lage der Verklebung aufstellt.
- Prozessschritte wie eine Plasmabehandlung zur Verbesserung der Rückseitenbeklebbarkeit werden unnötig

## Patentansprüche

1. Verfahren zum umwickelnden Verkleben von einem sich in einem Wicklungsquerschnitt ausdehnenden Medium mit einem Klebband, indem:
ein Klebeband von einer Klebebandrolle abgewickelt wird,
das abgewickelte Klebeband an einer Seite einer Trägerfolie (1) mit einer Klebmasseschicht (2) und auf einer gegenüberliegenden Seite partiell mit einer Trennmittelschicht (3) versehen ist,
wobei die von der Trennmittelschicht (3) bedeckte Fläche maximal 50 %,
vorzugsweise maximal 20 %, weiter vorzugsweise maximal 10 %, weiter vorzugsweise maximal 5 % der Gesamtfläche der Trägerrückseite einnimmt,
wobei zumindest die Oberfläche der mit einer Trennmittelschicht (3) ausgerüsteten Seite der Trägerfolie (1) geätzt ist,
das Klebeband um das sich im Wicklungsquerschnitt ausdehnende Medium herumgewickelt wird, so dass zumindest ein Abschnitt des Klebebandes mit der Klebmasseschicht (2) auf einer unteren Wicklungslage aufgeklebt wird.

2. Verfahren nach Anspruch 1,
**dadurch gekennzeichnet, dass** das Klebeband in mehreren übereinander klebenden Wicklungslagen um das Medium herumgewickelt wird.

3. Verfahren nach einem der Ansprüche 1 oder 2,
**dadurch gekennzeichnet, dass** zum Ätzen der Trägerfolie (1) Trichloressigsäure (Cl₃C-COOH) oder Trichloressigsäure in Kombination mit inerten kristallinen Verbindungen, bevorzugt Siliziumverbindungen, besonders bevorzugt [SiO₂]ₓ, einzusetzen.

4. Verfahren nach einem der vorstehenden Ansprüche,
**dadurch gekennzeichnet, dass** eine Klebmasse der Klebmasseschicht (2) aus der Gruppe auf natur- oder synthesekautschukbasierten Klebmassen, insbesondere Silikonklebmassen sowie Polyacrylatklebmassen gewählt wird.

## Claims

1. Method for bonding by wrapping a medium which expands transversely to a winding with an adhesive tape, in which:
an adhesive tape is unrolled from an adhesive tape roll,
the unrolled adhesive tape is provided on one side of a carrier film (1)
with an adhesive cement layer (2) and on an opposite side partially with a separating agent layer (3),
wherein the area covered by the separating agent layer (3) takes up not more than 50%, preferably not more than 20%, more preferably not more than 10%,
more preferably not more than 5%, of the total area of the carrier reverse side,
wherein at least the surface of the side of the carrier film (1) which is furnished with a separating agent layer (3) is etched,
the adhesive tape is wound around the medium which expands transversely to a winding, so that at least a portion of the adhesive tape is bonded to the adhesive cement layer (2) on a lower winding ply.

2. Method according to Claim 1,
**characterized in that** the adhesive tape is wound around the medium in several winding plies which are bonded one on top of the other.

3. Method according to either of Claims 1 and 2, **characterized in that** trichloroacetic acid (Cl₃C-COOH) or trichloroacetic acid in combination with inert crystalline compounds, preferably silicon compounds, more preferably [SiO₂]ₓ, are to be used to etch the carrier film (1).

4. Method according to any one of the preceding claims, **characterized in that** an adhesive cement of the adhesive cement layer (2) is selected from the group of adhesive cements based on natural or synthetic rubber, particularly silicone adhesive cements and polyacrylate adhesive cements.

## Revendications

1. Procédé pour le collage enveloppant d'un milieu s'étendant dans une section d'enroulement avec un ruban adhésif, dans lequel :
un ruban adhésif est déroulé d'un rouleau de ruban adhésif,
le ruban adhésif déroulé est pourvu, au niveau d'un côté d'une feuille de support (1), d'une couche de masse adhésive (2) et est pourvu, sur un côté opposé, partiellement d'une couche pelable (3),
la surface recouverte par la couche pelable (3) prenant au maximum 50 %, de préférence au maximum 20 %, plus préférablement au maximum 10 %, encore plus préférablement au maximum 5 % de la surface totale du revers du support,
au moins la surface du côté de la feuille de support (1) muni d'une couche pelable (3) étant gravée,
le ruban adhésif étant enroulé autour du milieu s'étendant dans une section d'enroulement, de sorte qu'au moins une partie du ruban adhésif est collée avec la couche de masse adhésive (2) sur une couche d'enroulement inférieure.

2. Procédé selon la revendication 1,
**caractérisé en ce que** le ruban adhésif est enroulé autour du milieu en plusieurs couches d'enroulement collant l'une au-dessus de l'autre.

3. Procédé selon l'une quelconque des revendications 1 et 2,
**caractérisé en ce que** pour la gravure de la feuille de support (1), de l'acide trichloroacétique (Cl₃C-COOH) ou de l'acide trichloroacétique en combinaison avec des composés cristallins inertes, préférablement des composés de silicium, particulièrement préférablement [SiO₂]ₓ, sont utilisés.

4. Procédé selon l'une quelconque des revendications précédentes,
**caractérisé en ce qu'**une masse adhésive de la couche de masse adhésive (2) est choisie dans le groupe des masses adhésives à base de caoutchouc naturel ou de caoutchouc de synthèse, en particulier des masses adhésives de silicone ainsi que des masses adhésives de polyacrylate.
